## Europäisches Patentamt
## European Patent Office
## Office européen des brevets

(11) Veröffentlichungsnummer: **0 158 593 B1**

(12) **EUROPÄISCHE PATENTSCHRIFT**

(45) Veröffentlichungstag der Patentschrift:
24.05.89

(51) Int. Cl.⁴: **B 25 J 19/06,** B 23 Q 5/58, F 16 P 3/14

(21) Anmeldenummer: **85810116.5**

(22) Anmeldetag: **18.03.85**

(54) Elektronische Warn- und Überwachungseinrichtung für Handhabungsvorrichtungen.

(30) Priorität: **09.04.84 CH 1777/84**

(43) Veröffentlichungstag der Anmeldung:
**16.10.85 Patentblatt 85/42**

(45) Bekanntmachung des Hinweises auf die Patenterteilung:
**24.05.89 Patentblatt 89/21**

(84) Benannte Vertragsstaaten:
**AT CH DE FR GB IT LI SE**

(56) Entgegenhaltungen:
**EP-A- 0 015 507**
**EP-A- 0 086 669**
**FR-A- 2 416 190**
**GB-A- 2 106 077**
**US-A- 4 349 858**

(73) Patentinhaber: **GET Gesellschaft für Elektronik-Technologie mbH, Klingenbergstrasse 16, D-4930 Detmold (DE)**

(72) Erfinder: **Schmall, Karl-Heinz, Waldstrasse 20, D-7570 Baden-Baden 19 (DE)**

(74) Vertreter: **Hepp, Dieter, HEPP & Partner AG Marktgasse 18, CH-9500 Wii (CH)**

ACTORUM AG

## Beschreibung

Die Erfindung betrifft eine elektronische Warn- und Überwachungseinrichtung für eine automatische Bearbeitungsvorrichtung, insbesondere für Roboter gemäss Oberbegriff von Anspruch 1.

Automatische Bearbeitungseinrichtungen führen im allgemeinen bestimmte programmierte Bewegungen aus. Besonders bei Robotern, die mit mehreren Achsen ausgestattet sind, ergeben sich durch das Zusammenwirken verschiedener Achsbewegungen, die zumeist noch gleichzeitig erfolgen, komplizierte Bewegungsformen des Roboters als Ganzes. Für eine Person, die sich in der Nähe des Roboters aufhält, ist nicht erkennbar, welche Bewegungen der Roboter im nächsten Augenblick ausführen wird. Die Bewegungsgeschwindigkeiten von Robotern werden immer höher, um die Bearbeitungszeiten möglichst abzukürzen. Geschwindigkeiten von einigen Metern je Sekunde sind durchaus üblich. Das Bewegungsprogramm eines Roboters beginnt plötzlich und im allgemeinen ohne Vorankündigung durch ein akustisches oder optisches Signal, so daß eine in der Nähe stehende Person vom plötzlichen Bewegungsbeginn völlig überrascht werden kann. Sie kann sich unter Umständen dann nicht mehr in sichere Entfernung begeben. Unfälle sind die Folge.

Um solchen Unfällen vorzubeugen, sind Einrichtungen entwickelt worden, die eine Überwachung eines bestimmten Bereiches um den Roboter herum oder durch einfache Kontakteinrichtungen ermöglichen. Beim Eindringen einer Person in den geschützten Bereich sprechen solche Überwachungseinrichtungen an und geben Warnsignale oder schalten die Bewegung des Roboters ab. Es sind auch Sicherheitsvorrichtungen bekannt, bei denen an den Armen des Roboters unmittelbar polsterförmige Widerstandssensoren aus einem elastischen, leitfähigen Material angeordnet sind, die beim Anschlagen des Roboterarmes an ein Hindernis, zum Beispiel an Körperteile einer Person, den Stoß elastisch gestalten. Es wurde auch schon vorgeschlagen, durch Zusammendrücken des leitfähigen, elastischen Materials eine Änderung des ohmischen Widerstandes oder des Blindwiderstands in einem Überwachungskreis hervorzurufen, der einen Stillstandsbefehl an die Robotersteuerung abgibt.

Aus der EP-A2-086 669 sind zum Beispiel verschiedene Arten von Berührungssensoren oder Annäherungsfühlern bekannt. Diese basieren auf kapazitiven/induktiven Sensoren, auf der objektabhängigen Kupplung von Sender- und Empfängerspulen oder sie messen die elektrostatische Aufladung von Objekt oder Roboter. Dabei können auch mehrere Sensoren durch einen gemeinsamen Oszillator mit einer Betriebsfrequenz von 10 Hz bis 10 kHz gespeist werden.

Die einzelnen Funktionen – zum Beispiel Abstands- und Berührungsmessung – sind dabei nach Sensoren-Gruppen getrennt. Im übrigen sind die einzelnen Sensoren in Unter-Steuereinheiten zusammengefaßt, die gemeinsam an eine Haupt-Steuereinheit angeschlossen sind.

Kapazitive Näherungssensoren mit zwei Oszillatoren, bei denen das Dielektrikum zwischen zwei nebeneinander angeordneten Kondensatorplatten durch ein sich näherndes Objekt beeinflußt wird, sind aus der CH-C-584 981 bekannt.

Die bekannten Warn- und Überwachungseinrichtungen lassen weder eine ständige Eigenprüfung auf Funktionssicherheit ohne zeitliche Einschränkung der Funktionsbereitschaft noch eine parallele Überwachung aller funktionswesentlichen Sensoren, Sensor-Bauteile und Sensor-Leitungen mit vertretbarem Aufwand zu. Von dem für den Unfallschutz zuständigen Stellen wird aber ein Höchstmaß an Betriebssicherheit solcher Überwachungseinrichtungen gefordert, die es notwendig machen, eine selbsttätige, lückenlose, kontinuierliche Eigenprüfung aller Funktionselemente und Verbindungsleitungen in sehr kurzen Zeitabständen (mehrere Male je Sekunde) vorzusehen.

Aufgabe der Erfindung ist es die Nachteile des Bekannten zu vermeiden, insbesondere also eine Warn- und Überwachungseinrichtung zu schaffen, die störungssichere Überwachung bei einfachem Aufbau von Überwachungseinrichtungen und Sensoranordnung gewährleistet. Erfindungsgemäß wird dies gemäß Kennzeichen von Anspruch 1 erreicht.

Besonders vorteilhaft ist die erfindungsgemäß vorgesehene zentrale Versorgung der L/C-Kreise und/oder der Wechselstrom-Brückenschaltungen mittels eines gemeinsamen Oszillators, da dadurch sowohl Kosten als auch störungsanfällige Bauteile verringert werden und gleichzeitig die zentrale Überwachung der einzelnen Sensor-Schaltungen auf Betriebsbereitschaft bzw. auf Vorliegen eines Abschalt-Signals möglich ist. Der Sicherheitsvorteil wird verstärkt, da auch eine zentrale Stromversorgung für die einzelnen Sensor-Schaltungen vorgesehen ist. Dies trifft zu, weil die Auslöseschaltung jeder der Sensor-Schaltungen bei Aktivierung infolge Annäherung an ein Objekt einen elektrischen Verbraucher derart zu- oder abschaltet, daß der von der zentralen Stromversorgung abgegebene Strom sich verändert, und weil die Stromüberwachungsschaltung mit dem Ausgang der zentralen Stromversorgung zur Abgabe eines Warnsignals an die zentrale Steuerschaltung bei Überschreiten bzw. Unterschreiten eines Sollwerts verbunden ist. Ersichtlicherweise läßt sich der Stromverbrauch der verschiedenen Sensor-Schaltungen exakt vorbestimmen. Sinkt also der Stromverbrauch der zentralen Stromversorgung unter einen vorbestimmbaren Sollwert ab, ist eine der Sensor-Schaltungen außer Betrieb oder es liegt eine andere Störung z.B. ein Leitungsbruch vor. Steigt dagegen der Stromverbrauch an, so läßt dies darauf schließen, daß ein zusätzlicher Stromverbraucher durch eine Auslöseschaltung in den Stromkreis eingeschaltet wurde, daß also ein Objekt im Bewegungsbereich der Bearbeitungsvorrichtung ermittelt wurde. In beiden Fällen, d.h. also sowohl bei Überschreiten als auch bei Unterschreiten des Strom-Sollwerts kann ein Warnsignal durch die zentrale Steuerschaltung abgegeben werden.

Die kapazitiven oder induktiven Sensoren wirken in einem elektrischen Schwingkreis oder in einer Brückenschaltung so, daß ihre Veränderung zu einer Veränderung der Schwingkreiseigenschaften oder der Brückenspannung führt, die in bekannten elektronischen Einrichtungen zur Erzeugung von Annäherungs- oder Kollisionssignalen ausgewertet werden können. Beim Annähern eines elektrisch leitenden Körpers, wie es menschliche Gliedmassen darstellen, oder auch beim Annähern an metallische Gegenstände, wird die Kapazität, bei metallischen Gegenständen auch die Induktivität eines solchen Sensors verändert. Kapazität bzw. Induktivität sind in einem Schaltkreis so angeordnet, daß sie entweder

1. die Frequenz eines Schwingkreises direkt bestimmen, welcher in einem elektrischen Schwingungserzeuger als frequenzbestimmendes Glied wirkt oder

2. in einer frequenzselektiven Auswerteschaltung oder Brückenschaltung angeordnet sind, in der sie durch ihre Veränderung eine Verstimmung hervorrufen und somit Abweichungen von vorher festgelegten Daten als Kollisionssignal zu erkennen ermöglichen.

Ersichtlicherweise wird die Überwachungseinrichtung dadurch besonders funktionssicher, daß quasi stufenlos ein mit zunehmender Annäherung ansteigendes Signal erzielt wird, welches beim mechanischen Kontakt zwischen einem Körper und der Elektrode ein Maximum erreicht. Die Funktion von Annäherungs- und Kontakt-Sensor wird also in einem Bauteil zusammengefaßt.

Besonders vorteilhaft ist es, wenn die Auswertungsschaltung eine Anordnung zur Ermittlung der Frequenzänderung pro Zeiteinheit und/oder zum Ausfiltern von Frequenzänderungen mit einem vorbestimmbaren Δt aufweist. Dadurch läßt sich z.B. erreichen, daß nur bei hohen Annäherungsgeschwindigkeiten, die auf ein Objekt im unmittelbaren Bewegungsbereich der Bearbeitungseinrichtung oder aber auf das Vorhandensein eines beweglichen Objekts, z.B. eines Menschen schließen lassen, ein Warn- und/oder Stopsignal ausgelöst wird. Dies läßt sich z.B. durch ein an sich bekanntes Differenzierglied erreichen.

Vorteilhaft läßt sich auch das Auftreten von Fehlermeldungen vermeiden, wenn eine Schwellwertbegrenzungseinrichtung vorgesehen ist, welche Warn- und/oder Abschaltsignale erst beim Erreichen einer vorbestimmbaren Kapazitäts-, Induktivitäts- oder Frequenzänderung abgibt. Dadurch lassen sich Signale mit einem geringeren Pegel unterdrücken, so daß die Auslösung von Warn- oder Abschaltsignalen sowohl von der Annäherungsgeschwindigkeit an ein Objekt als auch von der Entfernung des Objekts zum Roboter abhängig gemacht werden kann.

Besonders vorteilhaft ist es, wenn eine zusätzliche Überwachungsschaltung zur Funktionsüberwachung des Oszillators vorgesehen ist, die mit dem Ausgang des Oszillators verbunden ist und die vorteilhafterweise ebenfalls an die zentrale Steuerschaltung zur Auslösung eines Warnsignals beim Ausbleiben von Oszillator-Signalen angeschlossen ist. Dies führt zu Minimierung von Bauteilen und Maximierung der Betriebssicherheit.

Zusammenfassung der HF-Versorgungsleitung und der Stromversorgung gemäß Anspruch 2 erhöht die Betriebssicherheit weiter und vereinfacht den Leitungsaufwand. Die Erfindung ist in folgenden Ausführungsbeispielen anhand der Zeichnungen näher erläutert. Es zeigen:

Fig. 1 einen Roboterarm mit darauf angeordnetem kapazitiven Sensor

Fig. 2a einen Querschnitt durch den Roboterarm und den Sensor gemäß Figur 1.

Fig. 2b die Schaltung der elektronischen Überwachungseinrichtung mit Elektrodenanordnung gemäß Fig. 2

Fig. 3 eine schematisch dargestellte induktive Elektrodenanordnung mit Überwachungseinrichtung mit den Merkmalen der Erfindung

Fig. 4 eine Elektrodenanordnung mit einer mehrere Elektroden aufweisenden Kapazität

Fig. 5 eine Warn- und Überwachungseinrichtung mit zentralem Oszillator zur Abgabe einer konstanten Frequenz sowie einer Vielzahl von separaten Auswertungsschaltungen für die Elektrodenanordnung

Fig. 6 eine Warn- und Überwachungseinrichtung mit Differenzierglied.

Fig. 7 ein abgewandeltes Ausführungsbeispiel der Erfindung mit einer Brückenschaltung.

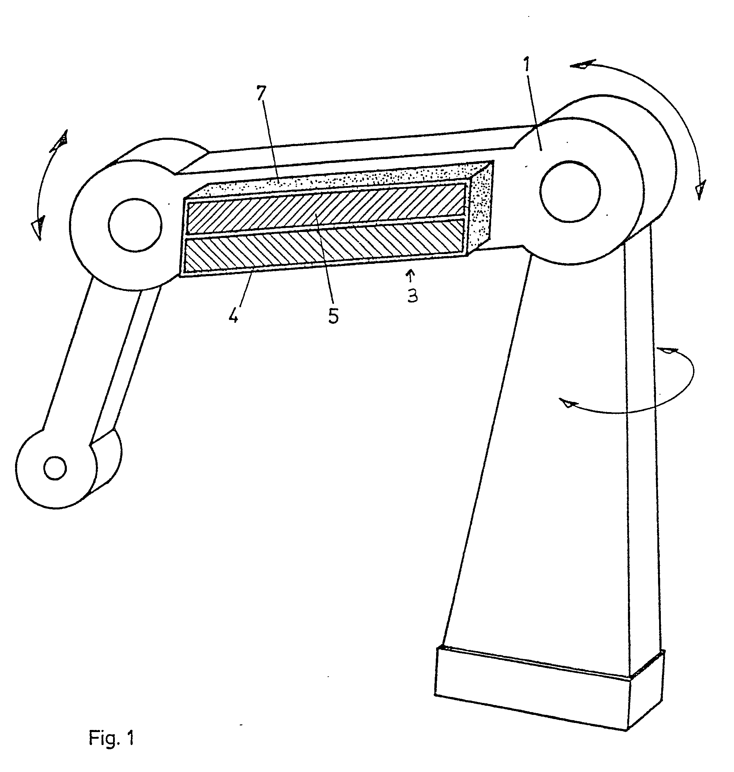

Gemäß Fig. 1 ist ein Roboterarm 1 mit einer Elektrodenanordnung 3 versehen, welche zwei als Kapazitäten wirkende Elektrodenflächen 4 und 5 aufweist. Die Elektrodenflächen 4 und 5 sind auf einem elastischen, elektrisch isolierenden Elektrodenträger 7 befestigt. Die Elektrodenflächen 4 und 5 bestehen dabei aus dünnen Metallfolien, die auf den Elektrodenträger 7 geklebt sind. Selbstverständlich kann aber auch der Elektrodenträger selbst leitfähig beschichtet sein. Durch die symmetrische Anordnung der Elektrodenflächen 4 und 5 läßt sich ein symmetrischer Aufbau der Auswertungsschaltung gegenüber Masse erreichen.

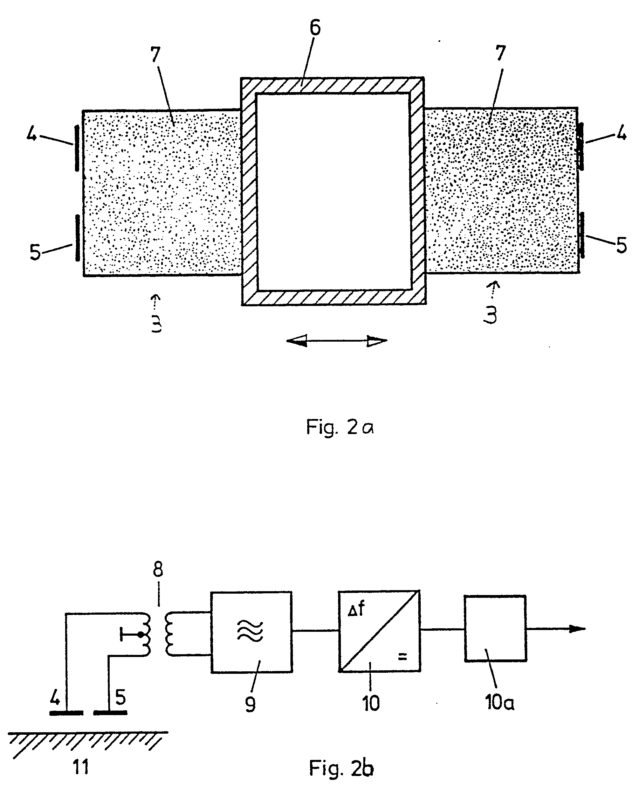

Fig. 2a zeigt einen Schnitt durch den Roboterarm 1 gemäß Fig. 1. Dabei wird ersichtlich, daß beidseitig je eine kapazitive Elektrodenanordnung 3 vorgesehen ist, um beidseitige Überwachung der Bewegung des Roboterarms 1 zu ermöglichen.

Fig. 2b zeigt, daß die Elektrodenflächen 4, 5 über einen HF-Übertrager 8 als frequenzbestimmendes Element eines Oszillators 9 wirken. Sobald sich ein Körper 11 den Elektrodenflächen 4, 5 nähert, verändert sich deren Kapazität, wodurch am Ausgang des Oszillators 9 eine Frequenzänderung Δf auftritt. Der Oszillator 9 ist mit einem Diskriminator 10 verbunden, in welchem die Frequenzänderung in ein Gleichstromsignal umgeformt wird. Dieses wird vom Diskriminator 10 einem Digitalumsetzer 10a eingespeist, welcher eine nicht dargestellte Alarmeinrichtung sowie eine Abschalteinrichtung für den Roboter ansteuert, sobald die der Frequenzänderung Δf entsprechende Änderung des Ausgangssignals am Diskriminator 10 signalisiert, daß sich der Roboterarm 6 bzw. die Elektrodenfläche 4, 5 einem Fremdobjekt nähern.

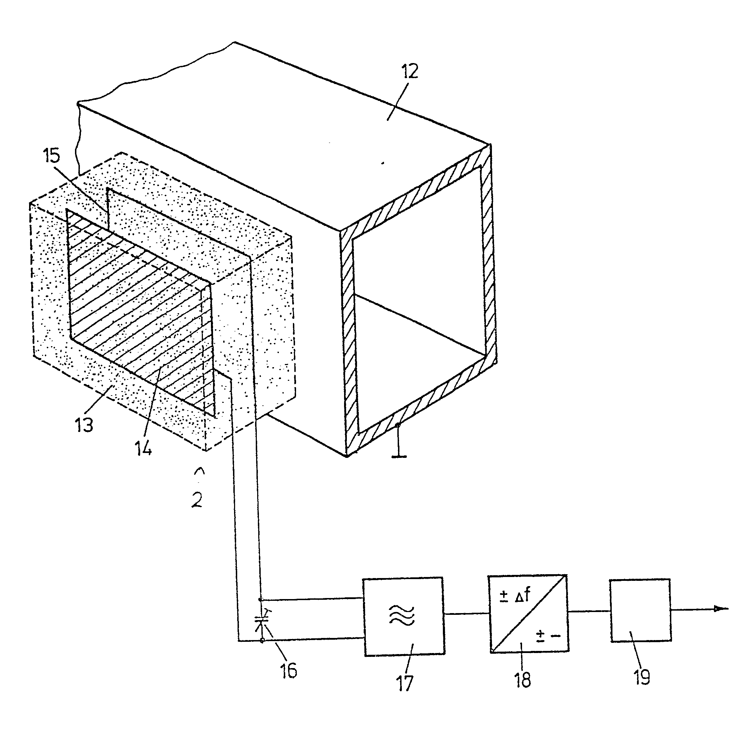

Fig. 3 zeigt eine induktive Elektrodenanordnung 2, die auf metallische Gegenstände bereits bei der Annäherung, auf menschliche Körper jedoch erst dann anspricht, wenn der elastische Sensorkörper durch die Kollision sich zusammendrücken beginnt.

Durch die Maßnahme ist es möglich, zwischen metallischen Gegenständen und menschlichen Körpern zu unterscheiden, so daß das Alarmsignal je nach dem Hindernis unterschiedlich gestaltet werden kann. Dies ist dann von Vorteil, wenn man zwischen einem metallischen Gegenstand, z.B. einem feststehenden Maschinenteil und einem nachgebenden Gegenstand, z.B. dem Körperteil einer Person, unterscheiden muß.

Hat man es mit einem Körperteil zu tun, so wird der Stoß durch die Beweglichkeit des Körperteils abgemindert. Es ist also hier möglich, eine schnelle Roboterbewegung in einer vertretbaren Zeit still zu setzen. Würde durch einen Programmfehler sich ein Roboterarm jedoch an einem Maschinenteil sehr schnell annähern, so könnte sich unter Umständen durch die Starrheit des Maschinenteiles und die Grenzbedingung, den Roboterarm nur über einen bestimmten Weg hinweg stillsetzen zu können, eine hohe Stoßbeschleunigung des Roboterarmes gegen das Maschinenteil oft nicht vermeiden lassen. Die Folge davon wäre eine Beschädigung des Roboters und/oder des betreffenden Maschinenteiles.

In Fig. 3 ist mit 12 der Roboterarm, 13 die elastische Elektrodenanordnung, 14 eine elastische Metallfläche, die auf der Oberseite der Elektrodenanordnung 13 nach außen hin angeordnet ist, 15 eine als Einzelwindung gezeigte Spule, die die Induktivität 8 eines Schwingkreises 15/16 ganz oder teilweise darstellt, 17 die Oszillatorschaltung, die eine Frequenz, abhängig von 15 und 16 erzeugt, 18 der Diskriminator, der im Ausgang eine frequenzabhängige Spannung erzeugt, und 19 der Signalauswerter für das Alarmsignal dargestellt. Auch diese Schaltung ist (wie die Schaltung gemäß Figur 2b) wieder so eingestellt, daß bei freilaufendem Roboterarm die Ausgangsspannung des Frequenzdiskriminators 18 keinen Alarm in dem Signalauswerter 19 hervorruft, während bei Annäherung eines metallischen Gegenstandes vor der Berührung bereits die Induktivität der Spule 15 so stark verändert wird, daß das Ausgangssignal des Diskriminators ein Ansprechen des Signalauswerters 19 bewirkt. Bei Berührung mit einem menschlichen Körperteil wird durch Verändern des Abstandes zwischen der elastischen Metallfläche 14 zur Spule 15 ebenfalls eine Induktivitätsveränderung hervorgerufen wird, welche ihrerseits die Frequenz des Oszillators 17 verändert und über den Diskriminator 18 einen Alarm auslöst.

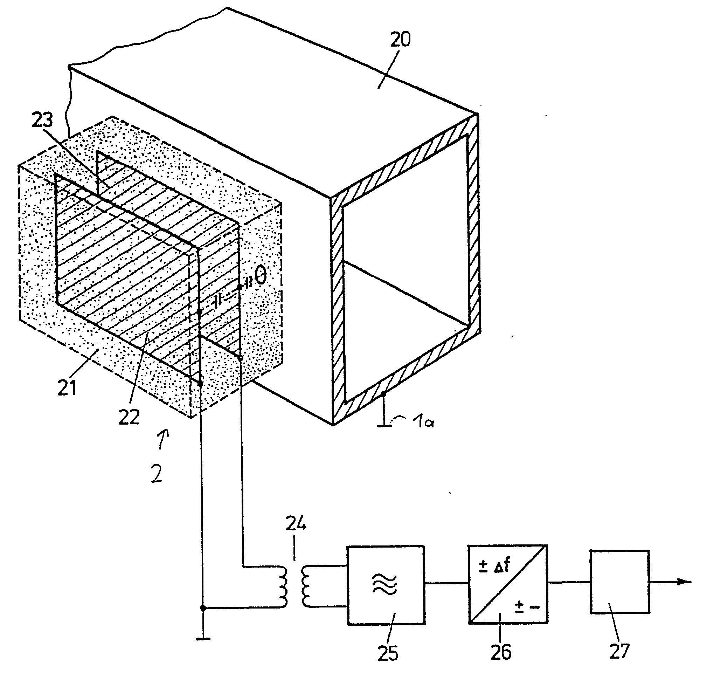

Fig. 4 zeigt eine Elektrodenanordnung 2, die eine äußerlich an Masse liegende kapazitive Elektrodenfläche 22 aufweist. Bei einer solchen Anordnung wird die Annäherung an einen metallischen Gegenstand oder an eine Person zunächst nicht ausgewertet; die Schaltung wird dann zu einem Alarm führen, wenn der elastische Sensorträger mechanisch verformt wird. Dann nämlich werden die leitfähigen Schichten 22 und 23 auf dem elastischen Sensorträger 21 gegeneinander bewegt. Außerdem wird durch die Gesamtverformung des Sensorträgers 21 auch noch die kapazitive Elektrode 23 gegen den metallischen Roboterarm 20 hin bewegt, so daß auch von der Seite her eine Kapazitätsveränderung stattfindet. Der Roboterarm 1 ist nämlich (bei 1a) geerdet, und bildet dadurch mit der leitfähigen Schicht 23 eine Kapazität. Eine solche Sensoranordnung läßt sich auch als Mehrschichtkapazität aus leitfähigem Schaumstoff aufbauen, so daß die gesamte kapazitive Veränderung beim Zusammendrücken des elastischen Sensorträgers hohe Werte erreichen kann.

Allerdings ist hier eine mechanische Berührung erforderlich, um ein Alarmsignal auslösen zu können.

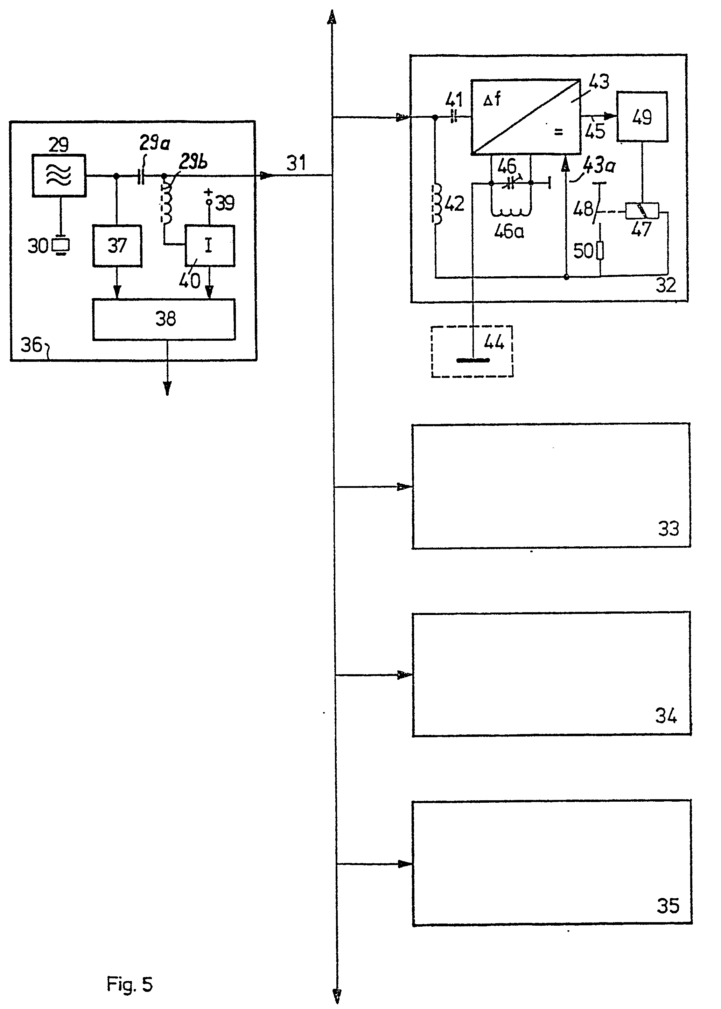

Die Anordnungen gemäß Figuren 1 bis 4 können jeweils bei einer Überwachungseinrichtung gemäß Figuren 5 bis 7 eingesetzt werden.

Figur 5 zeigt eine Überwachungs- und Warneinrichtung mit einer veränderlichen Frequenzauswertung anstelle einer veränderlichen Oszillatorfrequenz, die eine besonders kostengünstige, zentral erfaßte und überwachte Mehrfachanordnung von Sensoren an Roboterarmen ermöglicht. Roboter sind mit mehreren Achsen ausgerüstet. Sie können innerhalb des Raumes nahezu alle Bewegungen ausführen und jeden Punkt im Arbeitsbereich erreichen. Deswegen ist es oft erforderlich, sämtliche bewegten Arme so abzusichern, daß Kollisionen mit Gegenständen und Personen nicht zu Schäden führen.

Aus diesem Grunde ist es notwendig, daß jede Sicherungseinrichtung in sich selbst überwacht wird, so daß auch bei Ausfall der Sicherungseinrichtung ein Kontrollsignal abgegeben werden kann.

Besonders einfach ist dies mit dem in Figur 5 dargestellten Zentralsystem möglich. Ein Oszillator 29 ist in diesem System mit einem Quarz 30 ausgerüstet. Er gibt ein Signal mit fester Frequenz über einen Kopplungs-Kondensator 29 an die zentrale Leitung 31 ab, an der sämtliche Sensor-Auswertungsschaltungen 32, 33, 34 und 35, die im Aufbau gleich sind, angeschlossen sind.

Die Anzahl der anschließbaren Auswertungsschaltungen ist praktisch unbegrenzt; sie hängt lediglich von der verfügbaren Leistung des Generators 36 ab.

Im zentralen Generator 36 ist außerdem eine Überwachungsschaltung 37 eingebaut, welche über eine Steuerschaltung 38 einen Alarm abgibt, sobald der Oszillator 29 ausfällt. Die Überwachungsschaltung ist als Gleichrichteranordnung ausgebildet und greift die Ausgangsspannung des Oszillators 29 ab. Die Steuerschaltung 38 weist an sich bekannte, voreinstellbare Schwellwert-Schaltungen auf, mit denen sich Strom- oder Spannungsschwankungen am Eingang ermitteln und beim Abweichen von einem einstellbaren Sollwert in Warnsignale umwandeln lassen.

Außerdem wird über die gleiche zentrale Leitung 31, die vorzugsweise als Koaxialleitung ausgebildet werden kann, die Stromversorgung für die Sensoren aus einer Stromquelle 39 über eine Stromüberwachungsschaltung 40 auf die Versorgungs-Leitung 31 gegeben. Durch bekannte Mittel (Spule 29b, Kopplungskondensator 29a) ist dabei eine Trennung zwischen der hochfrequenten Energie des Oszillators 29 und der Stromversorgung (Gleichstrom) ermöglicht.

Die Stromversorgung der einzelnen Bauelemente in den Sensoren ist nur für die frequenzselektive Schaltung 43 schematisch bei 43a und für das Relais 47 bei 47a angedeutet, jedoch im übrigen nicht detailliert dargestellt, weil dies dem Fachmann gebräuchlich ist. Jedenfalls wird die gesamte Schaltungsanordnung des Sensors 32 über die Leitung 31 und die Spule 42 mit Versorgungsspannung bzw. Strom von der Stromquelle 39 versorgt.

Der Ausgang der Stromüberwachungsschaltung 40 wird ebenfalls auf die Steuerschaltung 38 geleitet. Je nach Anzahl der angeschlossenen Sensoren 32 bis 35, die für sich konstanten Strombedarf haben, ist der von der Stromquelle 39 über die Stromüberwachungsschaltung 40 fließende Strom festgelegt, so daß eine Überwachung des Ausfalls der Sensoren 32 bis 35 durch eine entsprechende Stromänderung in der Stromüberwachungsschaltung 40 anzeigbar ist. Sinkt der Stromverbrauch ab, wird auf den Ausfall eines Sensors 32–35 geschlossen, die Stromüberwachungsschaltung 40 gibt ein Signal an die Steuerschaltung 38 ab, die ihrerseits ein Warnsignal auslöst.

Die Schaltungen der Sensoren 32 bis 35 sind gleich, in Figur 5 ist deshalb nur eine Schaltung dargestellt.

Im Eingang der Auswertungsschaltungen 32 bis 35 liegt eine Entkoppelschaltung 41/42, die dafür sorgt, daß der hochfrequente Anteil und der Gleichstromanteil voneinander getrennt werden. Die frequenzselektive Schaltung 43 ist so eingestellt, daß bei freiliegender Sensor-Elektrode 44 (Normalbetrieb) die Ausgangsspannung am Ausgang 45 Null beträgt. Das HF-Signal des Oszillators 29 führt also nicht zu einem Gleichstrom-Signal am Ausgang. Die Abstimmung des Kreises läßt sich mit einer Abgleichkapazität 46 oder mit der Induktivität 46a erreichen.

Die Ausgangsspannung Null am Ausgang 45 ist dabei nicht Bedingung, sie kann auch jeden anderen Wert betragen, sofern die Signalauswertungsschaltung 49 entsprechend eingestellt ist.

Frequenzselektive Schaltungen, wie Diskriminatoren oder Bandfilter mit veränderbarer Abgleichfrequenz sind allgemein bekannt, so daß hier auf eine Beschreibung der Schaltungsdetails verzichtet wird.

Ergeben sich im Betrieb Veränderungen durch Annäherung eines Körpers an die Elektrode 44, so wird in der Signalausweteschaltung 49 die Veränderung des Signals am Ausgang 45 dazu benutzt, um ein Schaltglied 47 einzuschalten, welches einen Kontakt 48 betätigt. Der Kontakt 48 legt die Leitung 31 vom Generator 36 über einen Widerstand 50 an Masse und erhöht somit den Strom über den in der Stromüberwachungsschaltung 40 festgelegten Grenzwert hinaus, so daß dadurch ein Alarmsignal über die Steuerschaltung 38 gegeben wird. Selbstverständlich ließe sich die Schaltung auch derart realisieren, daß bei Aktivierung des Kontakts 48 der Widerstand 50 von Masse getrennt, also der Stromverbrauch verringert würde. Dies hätte aber höheren Stromverbrauch im Normalbetrieb zur Folge, da dann der Widerstand 50 die Stromquelle 39 dauernd belasten würde.

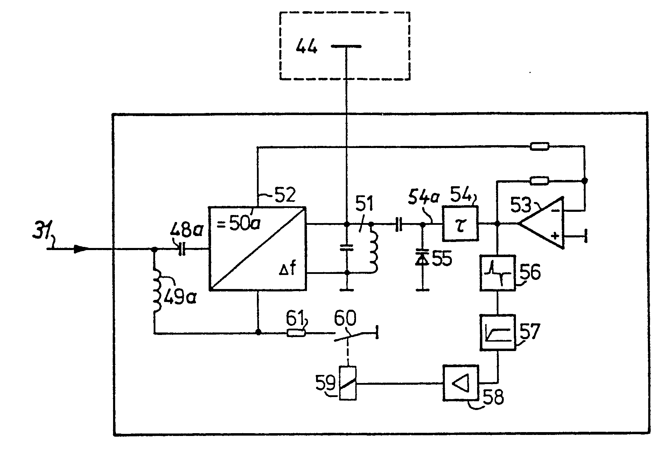

Figur 6 zeigt eine modifizierte Auswertungsschaltung 32 gemäß Figur 5, die eine zusätzliche Kompensationsschaltung enthält.

Die Forderung, den Ausgang der frequenzauswertenden Schaltung so festzulegen, daß im Normalbetrieb (ohne Annäherung) kein Signal abgegeben wird, erfordert entweder hochstabile Kreise oder aber eine automatische Adaption an die unvermeidlichen Veränderungen von Kapazität oder Induktivität im Sensorkreis. Figur 6 zeigt eine solche adaptive Regelschaltung.

In Figur 6 ist 48, 49 die Entkopplungsschaltung zwischen hochfrequentem Anteil und Gleichstromanteil im Signal der Sammelleitung 31, an die sämtliche Auswertungsschaltungen 32 bis 35 angeschaltet sind. 50 stellt die frequenzselektive Schaltung dar, deren Ausgang am Schwingkreis 51 liegt. Die Elektrode 44 ist als zusätzliche Kapazität an den Kreis angeschaltet. An Stelle der Elektrode 44 könnte auch eine Induktivität parallel zur Induktivität oder in Serie zur Induktivität aus dem Schwingkreis 51 als Sensor angeordnet sein, ohne daß dies die Funktion der Schaltung verändert.

Am Ausgang 52 der frequenzselektiven Schaltung 50 wird ein Gleichspannungssignal erzeugt, das einem Operationsverstärker 53, einem Tiefpaß 54 sowie einer spannungsabhängigen variablen Kapazität 55 zugeleitet wird, welche ihrerseits parallel zum Schwingkreis 51 liegt. Spannungsänderungen am Ausgang 54a des Tiefpasses 54 werden infolgedessen Veränderungen der Kapazität mit 55 und damit Veränderungen der Abstimmung des Kreises 51 hervorrufen. Es können auch andere Nachstimm-Methoden bekannter Art angewendet werden, z.B. Drehkondensatoren oder induktive Variometer mit Motornachstimmung.

Gleiche Nachstimmeinrichtungen lassen sich auch in Wechselstrombrückenschaltungen zum automatischen Nachgleich in bekannter Weise anwenden.

Die Spannung am Ausgang 52 wird dabei bezüglich ihrer Polarität und Höhe so gewählt, daß über den Tiefpaß 54 langsame Änderungen, die sich aus Veränderungen der Kreiskapazitäten 52 ergeben, innerhalb des Kreises 50, 51, 44, 53, 54, 55 selbsttätig ausgeregelt werden, so daß am Eingang der Detektorschaltung 56 immer gleiche Spannung anliegt, unabhängig davon, ob sich durch langsame temperatur- oder alterungsbedingte Änderungen die Kapazität 44 verändert.

Sobald jedoch eine schnelle Veränderung der Kapazität 44 durch die Annäherung des Roboters an einen leitfähigen Körper eintritt, kann die im Zeitverhalten durch den Tiefpaß 54 bestimmte Nachregelung nicht folgen und es wird im Ausgang der als Differenzialglied ausgebildeten Detektorschaltung 56 ein Signal abgegeben, welches über eine Schwellwertstufe 57 zu einem Schaltverstärker 58 und zu einem, vorzugsweise als Relais ausgebildeten Schaltglied 59 geführt ist.

Dort wird über einen Schaltkontakt 60 der Belastungswiderstand 61 an Masse geschaltet, welcher ein Erhöhen des Stromes in der Zuführungsleitung zum Sensor hervorruft und dadurch in der Stromüberwachung des Generators (Figur 5/36) ein Alarmsignal auslöst.

Eine Sensoranordnung, die Alarm-Signale sowohl für die Annäherung als auch für das Zusammendrücken abgeben kann, ermöglicht folgende besonders vorteilhafte Signalgabe:

Bei Annäherung wird ein Signal abgegeben, das z.B. sofort ein akustisches Warnsignal auslösen kann, um einer gefährdeten Person noch die Möglichkeit zu geben, der Bewegung des Roboters auszuweichen. Das würde verhindern, daß der Roboter seine Bewegung stillsetzen muß und dadurch Zeit verloren wird.

Dadurch könnte die ungestörte Funktion des Roboters ohne Zeitverlust erhalten werden, solange es der Person gelingt, sich aus dem Bewegungsbereich des Roboters schnell zu entfernen.

Kommt es jedoch zu einer Kollision zwischen der Person und dem Roboter, so wird das dann abgegebene Signal, welches beim Zusammendrücken des elastischen Sensorkörpers entsteht, dazu verwendet, um die Bewegung des Roboters stillzusetzen.

Es ist bei einer solchen Sensoranordnung also möglich, zwei unterschiedliche und abgestufte Alarmsignale zu erzeugen.

Eine solche Doppelfunktion wird dadurch erreicht, daß der äußere Belag eines kapazitiven Sensors als Sensorfläche für Annäherung wirkt, die so angeordnet ist, daß die durch die Annäherung bewirkte Verstimmung nur ein bestimmtes Maß erreicht, welches sich in der Auswerteschaltung der Sensorelektronik als bestimmte Spannungsveränderung innerhalb gewisser Grenzen darstellt.

Sobald jedoch der elastische Sensorkörper verformt wird, tritt durch die zusätzlich eingebaute kapazitive Fläche eine stärkere Veränderung der Frequenz des frequenzbestimmenden Kreises auf, welche Schwellwerte so überschreitet, daß Stillsetz-Alarm-Signale über entsprechende Schwellwertfestlegungen erreicht werden.

Dies läßt sich z.B. einfachst dadurch erreichen, daß bei der Schaltung gemäß Fig. 4 die Elektrode 23 auf Masse gelegt und der Masseanschluß der Elektrode 22 entfernt wird.

Die in Figur 5 und 6 gezeigte praktische Ausführung des erfindungsgemäßen Gedankens hat den Vorteil großer Flexibilität und kompletter Überwachung aller Schaltkreise, wie dies für die Aufrechterhaltung der Funktionssicherheit und der Zuverlässigkeit von großer Wichtigkeit ist.

Vorteil der Anordnung aus Figur 5 und 6 besteht ferner darin, daß als Oszillatorfrequenz eine Frequenz verwendet werden kann, die allgemein für industrielle Steuerungen freigegeben ist, so daß die Störstrahlung von Sensoren im Hochfrequenzbereich für die Grundwelle nicht mehr relevant ist.

Dadurch ist der allgemeinen Einführung solcher Systeme für die Überwachung von Robotern auch dann, wenn die Roboter eng beieinander in Bearbeitungsstraßen eingesetzt sind, keine Grenzen gesetzt, weil sich die Überwachungssysteme nach der erfindungsgemäßen Weise untereinander nicht stören können.

Es ist nämlich nur notwendig, die Leistung des Generators 36 so hoch zu setzen, daß gegenüber störenden Einflüssen auf der gleichen Frequenz von außen genügend große Abstände zwischen Nutz- und Störsignal erreicht werden.

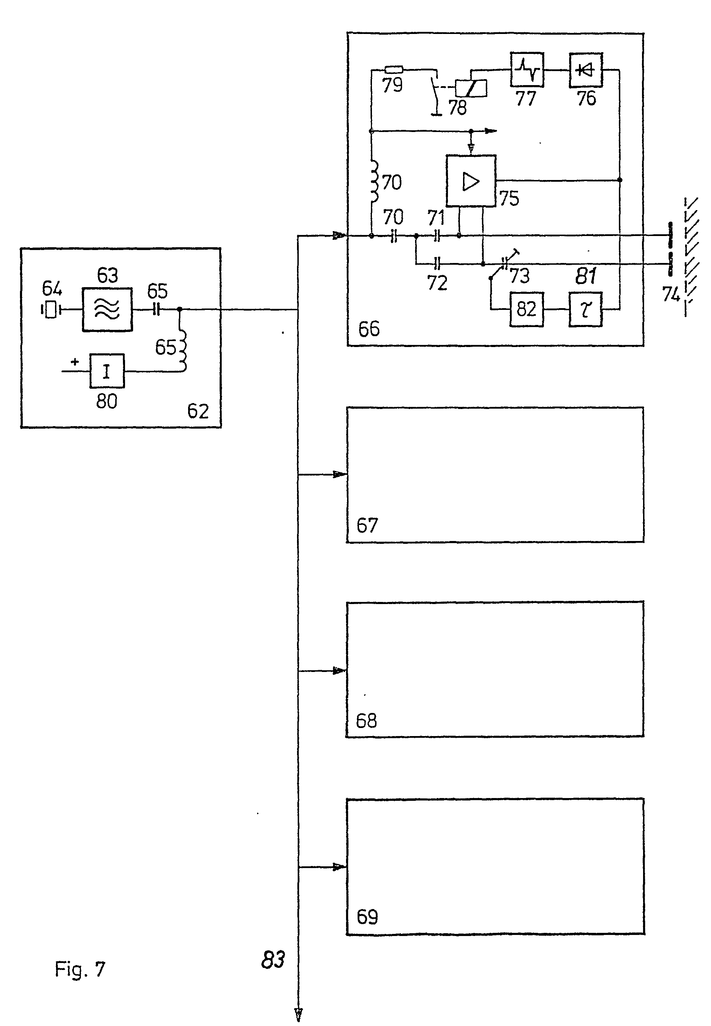

Fig. 7 zeigt ein Ausführungsbeispiel, daß in wichtigen Merkmalen dem Ausführungsbeispiel gemäß Fig. 5 entspricht. Dabei ist analog ein Oszillator 63 mit einem Quarz ausgerüstet. Er gibt eine feste Frequenz an die zentrale Leitung 83 ab, an der sämtliche Sensor-Auswertungsschaltungen 66, 67, 68 und 69 angeschlossen sind. Im Generator 62 ist außer der Oszillatoranordnung noch ein Hochpaß 65 vorgesehen, der die von einer Stromüberwachungsschaltung 80 abgegebene Gleichspannung ebenfalls an die zentrale Leitung 83 abgibt. Eine wie in Fig. 5 vorgesehene Steuerschaltung (38) sowie die Überwachungsschaltung 37 und die Stromquelle 39 sind der Einfachheit halber nicht dargestellt. Die Funktion ist jedoch diesbezüglich analog dem Ausführungsbeispiel gemäß Fig. 5. Die Stromüberwachungsschaltung 80 in Figur 7 entspricht dem Bezugszeichen 40 in Figur 5.

Die Sensorauswertungsschaltung 66 weist eingangsseitig eine Entkopplungsschaltung 70 auf, durch welche der Gleichstromanteil von der Hochfrequenzspannung des Oszillators 63 getrennt wird. Die Hochfrequenzspannung wird an eine Brückenschaltung gelegt, welche aus Teilkapazitäten 71, 72 und 73 besteht. Außerdem dienen die beiden Elektroden 74 als vierte Brückenkapazität. Die Brücke läßt sich einstellen durch die Teilkapazität 73, welche als Varaktordiode ausgebildet ist. Über dem Brückenausgang liegt ein Brückenverstärker 75, welcher ein Ausgangssignal an den Gleichrichter 76 sowie das Zeitglied 81 abgibt. Das Zeitglied 81 bewirkt zusammen mit einer Nachstimmschaltung 82 eine Nachstimmung der Brücke durch Veränderung der Brückenkapazität 73, sofern die an der Elektrode 74 durch Veränderung von Umgebungsbedingungen entstehenden Kapazitätsveränderung langsam ist. Tritt jedoch eine schnelle Kapazitätsänderung auf, vermag das Zeitglied 81 die Brücke nicht nachzuregeln und das resultierende Brückenausgangssignal am Brückenverstärker 75 steuert über den Gleichrichter 76 und ein Differenzierglied 77 das Schaltglied 78 an, welches einen Lastwiderstand 79 auf Masse legt, so daß der Stromverbrauch über die zentrale Leitung 83 sprungartig ansteigt, was in der Stromüberwachungsschaltung 80 gemessen werden kann. Durch das Zusammenspiel des Zeitglieds 81 und der Differenzierschaltung 77 läßt sich ersichtlicherweise eine automatische Unterdrückung von Störsignalen erreichen, wie sie z.B. bei Veränderungen im größeren Abstand von der Sensorelektrode 74, aufgrund von Veränderungen der Sensorelektrode 74 selbst oder durch Feuchtigkeitseinflüsse etc. hervorgerufen werden können. Jede schnelle Kapazitätsänderung führt jedoch zu einer schnellen Signalschwankung am Brückenausgang, die durch den Brückenverstärker 75 verstärkt wird und über das Schaltglied 78 die Stromschwankung an der zentralen Leitung 83 bewirkt, welche über die Stromüberwachungseinrichtung 80 zur Alarmauslösung führt.

## Patentansprüche

1. Elektronische Warn- und Überwachungseinrichtung für eine automatische Bearbeitungsvorrichtung, insbesondere für einen Roboter, bei welcher für die beweglichen Teile der Bearbeitungsvorrichtung wenigstens zwei Sensor-Schaltungen (32–35, 66–69) vorgesehen sind, wobei die Sensor-Schaltungen jeweils wenigstens eine Sensor-Elektrode (44, 74) mit einem kapazitiven und/oder einem induktiven Funktionsteil aufweisen, das an einem beweglichen Teil angeordnet ist und das als frequenzbestimmendes bzw. blindwiderstandbestimmendes Element in einen L/C-Kreis (46, 46a; 51) und/oder als Glied einer Wechselstrom-Brückenschaltung (71, 72, 73) geschaltet ist, das mit einer Betriebsfrequenz von wenigstens 10 kHz arbeitet, und wobei das induktive und/oder das kapazitive Funktionsteil durch ein Isolationselement (7) isoliert und derart hochohmig gegen wenigstens einen Teil der Bearbeitungsvorrichtung (1, 6, 12) angeordnet ist, daß die Annäherung eines elektrisch leitfähigen Körpers, insbesondere eines metallischen Objekts oder eines Menschen eine Veränderung des induktiven und/oder des kapazitiven Blindwiderstands der Sensor-Elektrode (44, 74) bewirken kann, wobei außerdem der L/C-Kreis mit Auslöseschaltungen (43, 47–50; 50a, 53–61; 75–79) zur Auslösung eines Signals, insbesondere eines Warn- oder Abschaltsignals bei Veränderung einer L/C-Kreis-Frequenz bzw. der Verstimmung einer Brückenschaltung verbunden ist, wobei eine Steuerschaltung (38) zur Abgabe eines Warn- oder Abschaltsignals vorgesehen ist, und wobei außerdem ein zentraler Generator (36, 62) mit einem Oszillator (29, 63) zur Versorgung der L/C-Kreise und/oder der Wechselstrom-Brückenschaltungen in den einzelnen Sensorschaltungen vorgesehen und mit diesen verbunden ist, dadurch gekennzeichnet, daß die Steuerschaltung (38) zentral für die Sensor-Schaltungen (32–35, 66–69) ausgebildet und an den Ausgang der Auslöseschaltungen (43, 47–50; 50a, 53–61; 75–79) angeschlossen ist, daß eine zentrale Stromversorgung (39) mit den Sensor-Schaltungen (32–35, 66–69) verbunden ist, daß die Auslöseschaltungen (47–50; 53–61; 76–79) bei Aktivierung einen elektrischen Verbraucher (50, 61, 79) derart zu- oder abschalten, daß der von der zentralen Stromversorgung abgegebene Strom sich verändert, und daß eine Stromüberwachungsschaltung (40, 80) mit dem Ausgang der zentralen Stromversorgung zur Abgabe eines Warnsignals an die zentrale Steuerschaltung (38) bei Überschreiten bzw. bei Unterschreiten eines Sollwerts verbunden ist.

2. Elektronische Warn- und Überwachungseinrichtung nach Anspruch 1, dadurch gekennzeichnet, daß die HF-Signale des Oszillators (29, 63) über eine gemeinsame Versorgungsleitung (31, 83) zusammen mit den Ausgangssignalen der zentralen Stromversorgung (39) an die Sensorschaltungen (32–35, 66–69) gelegt sind, und daß Mittel (29a, 29b; 41, 42; 65, 70; 48a, 49a) zur Trennung der HF-Kreise und der Gleichstromkreise vorgesehen sind.

3. Elektronische Warn- und Überwachungseinrichtung nach einem der Ansprüche 1 oder 2, dadurch gekennzeichnet, daß eine zusätzliche Überwachungsschaltung (37) zur Funktionsüberwachung des Oszillators (29, 63) mit dessen Ausgang verbunden ist.

4. Elektronische Warn- und Überwachungseinrichtung nach Anspruch 3, dadurch gekennzeichnet, daß die Überwachungsschaltung (37, 80) an die zentrale Steuerschaltung (38) zur Auslösung eines Warnsignals beim Ausbleiben von Oszillator-Signalen angeschlossen ist.

5. Elektronische Warn- und Überwachungseinrichtung nach einem der vorangehenden Ansprüche, dadurch gekennzeichnet, daß die Sensorschaltungen (32–35, 66–69) wenigstens eine Anordnung (54, 56; 77, 81) zur Ermittlung der Frequenzänderung pro Zeiteinheit und/oder zum Ausfiltern von Frequenzänderungen mit einem vorbestimmbaren $\Delta t$ aufweist.

6. Elektronische Warn- und Überwachungseinrichtung nach Anspruch 5, dadurch gekennzeichnet, daß eine Anordnung zur Ermittlung der Frequenzänderung ein Differenzglied (57, 77) ist.

7. Elektronische Warn- und Überwachungseinrichtung nach einem der vorangegangenen Ansprüche, dadurch gekennzeichnet, daß die Auswertungsschaltung eine Schwellwertbegrenzungseinrichtung (57) aufweist, welche Warn- und/oder Abschaltsignale erst beim Erreichen einer vorbestimmbaren Frequenzänderung abgibt.

8. Elektrodenanordnung für eine elektronische Warn- und Überwachungseinrichtung nach einem der vorangehenden Ansprüche, dadurch gekennzeichnet, daß die Elektrodenanordnung wenigstens ein als Kapazität (4, 5; 22, 23; 14, 15) ausgebildetes flächiges Teil aufweist, das mit dem beweglichen Teil (1, 6, 12) der Bearbeitungsvorrichtung mittels eines elektrisch isolierenden, elastischen Körpers verbunden ist.

9. Elektrodenanordnung nach Anspruch 8, dadurch gekennzeichnet, daß das als Kapazität (15, 23) dienende Teil im elektrisch isolierenden Element eingebettet ist.

10. Elektrodenanordnung nach Anspruch 8 und 9, dadurch gekennzeichnet, daß wenigstens zwei als Kapazität (14, 15, 22, 23) dienende flächige Teile mit einer dazwischen liegenden elastischen Schicht (21) derart angeordnet sind, daß bei Ausübung eines mechanischen Drucks auf die Elektrodenanordnung die elastische Schicht komprimierbar, der Elektrodenabstand dadurch verringerbar und die Kapazität veränderbar ist.

## Claims

1. Electronic warning and monitoring system for an automatic machining device, in particular for a robot, in which at least two sensor circuits (32–35, 66–69) are provided for the moving parts of the machining device, wherein the sensor circuits each comprise at least one sensor electrode (44, 74) with a capacitive and/or an inductive functional part which is arranged on a moving part and is connected, as frequency-determining or reactance-determining element, into an L/C circuit (46, 46a; 51) and/or as an element of an alternating current bridge circuit (71, 72, 73), which operates at an operating frequency of at least 10 kHz, and wherein the inductive and/or the capacitive functional part is insulated by an insulating element (7) and is arranged with high resistance towards at least one part of the machining device (1, 6, 12) in such a way that the approach of an electrically conductive body, in particular a metallic object or a human can cause a change in the inductive and/or the capacitive reactance of the sensor electrode (44, 74), wherein the L/C circuit is also connected to trigger circuits (43, 47–50; 50a, 53–61; 75–79) for triggering a signal, in particular a warning or shutdown signal when an L/C-circuit frequency changes or when a bridge circuit is unbalanced, wherein a control circuit (38) is provided for emitting a warning or shutoff signal, and wherein a central generator (36, 62) is also provided with an oscillator (29, 63) for supplying the L/C circuits and/or the alternating current bridge circuits in the individual sensor circuits and is connected thereto, characterised in that the control circuit (38) is constructed centrally for the sensor circuits (32–35, 66–69) and is connected to the output of the trigger circuits (43, 47–50; 50a, 53–61; 75–79) in such a way that a central power supply (39) is connected to the sensor circuits (32–35, 66–69), the trigger circuits (44–50; 53–61; 76–79) switch an electric load (50, 61, 79) on or off during actuation, such that the current delivered by the central power supply changes, and a current monitoring circuit (40, 80) is connected to the output of the central power supply for emitting a warning signal to the central control circuit (38) when a desired value is exceeded or fallen below.

2. Electronic warning and monitoring system according to Claim 1, characterised in that the HF signals of the oscillator (29, 63) are fed via a common supply line (31, 83) together with the output signals of the central power supply (39) to the sensor circuits (32–35, 66–69), and means (29a, 29b; 41, 42; 65, 70; 48a, 49a) for separating the HF-circuits and the direct current circuits are provided.

3. Electronic warning and monitoring system according to one of Claims 1 or 2, characterised in that an additional monitoring circuit (37) is connected to the output of the oscillator (29, 63) for monitoring operation of the oscillator (29, 63).

4. Electronic warning and monitoring system according to Claim 3, characterised in that the monitoring circuit (37, 80) is connected to the central control circuit (38) for triggering a warning signal in the absence of oscillator signals.

5. Electronic warning and monitoring system according to one of the preceding claims, characterised in that the sensor circuits (32–35, 66–69) have at least one arrangement (54, 56; 77, 81) for determining the frequency change per unit of time and/or for filtering out changes of frequency with a predeterminable $\Delta t$.

6. Electronic warning and monitoring system according to Claim 5, characterised in that an arrangement for determining the change of frequency is a differentiator (57, 77).

7. Electronic warning and monitoring system according to one of the preceding claims, characterised in that the evaluating circuit has a threshold value limiting device (57) which emits warning and/or shutoff signals only when a predeterminable frequency change is obtained.

8. Electrode arrangement for an electronic warning and monitoring system according to one of the preceding Claims, characterised in that the electrode arrangement comprises at least one planar part constructed as a capacitor (4, 5; 22, 23; 14, 15), which is connected to the moving part (1, 6, 12) of the machining device by means of an electrically insulating, elastic body.

9. Electrode arrangement according to Claim 8, characterised in that the part used as capacitor (15, 23) is embedded in the electrically insulating element.

10. Electrode arrangement according to Claims 8 and 9, characterised in that at least two planar parts used as capacitor (14, 15, 22, 23) with an interposed elastic layer (21) are arranged such that, when a mechanical pressure is applied to the electrode arrangement, the elastic layer is compressible and the electrode spacing is thus reducible and the capacitor variable.

## Revendications

1. Dispositif électronique d'alarme et de surveillance pour une installation automatique de travail, en particulier pour un robot, dans lequel au moins deux circuits à capteur (32–35, 66–69) sont prévus pour les parties mobiles de l'installation de travail, les circuits à capteur comportant respectivement au moins une électrode de capteur (44, 74) avec une partie fonctionnelle capacitive et/ou une partie fonctionnelle inductive, disposée sur une partie mobile et branchée comme élément de détermination de fréquence ou de réactance dans un circuit LC (46, 46a; 51) et/ou comme élément d'un circuit en pont à courant alternatif (71, 72, 73), fonctionnant à une fréquence de travail d'au moins 10 kHz, et la partie fonctionnelle inductive et/ou la partie fonctionnelle capacitive étant isolée par un isolant (7) et présentant une résistance si élevée par rapport à au moins une partie de l'installation de travail (1, 6, 12) que le rapprochement d'un corps électriquement conducteur, en particulier un objet métallique ou une personne, peut entraîner une modification de la réactance inductive et/ou de la réactance capacitive de l'électrode de capteur (44, 74), le circuit LC étant relié à des circuits de déclenchement (43, 47–50; 50a, 53–61; 75–79) pour déclencher un signal, en particulier un signal d'alarme ou de coupure en cas de modification de la fréquence du circuit LC ou en cas de déséquilibrage d'un circuit en pont, un circuit de commande (38) étant prévu pour délivrer un signal d'alarme ou de coupure, et un générateur central (36, 62) doté d'un oscillateur (29, 63) pour alimenter les circuits LC et/ou les circuits en pont à courant alternatif étant en outre prévu dans les différents circuits à capteur et relié à ceux-ci, caractérisé en ce que le circuit de commande (38) est agencé de manière à être central pour les circuits à capteur (32–35, 66–69) et est connecté à la sortie des circuits de déclenchement (43, 47–50; 50a, 53–61; 75–79), en ce qu'une alimentation électrique centrale (39) est reliée aux circuits à capteur (32–35, 66–69), en ce que les circuits de déclenchement (47–50, 53–61; 76–79), lorsqu'ils sont activés, mettent en circuit ou hors circuit un appareil d'utilisation électrique (50, 61, 79) d'une manière telle que le courant délivré par l'alimentation centrale varie, et en ce qu'un circuit de contrôle du courant (40, 80) est relié à la sortie de l'alimentation centrale pour envoyer au circuit de commande central (38) un signal d'alarme au-dessus ou au-dessous d'une valeur de consigne.

2. Dispositif électronique d'alarme et de surveillance selon la revendication 1, caractérisé en ce que les signaux HF de l'oscillateur (29, 63) sont envoyés aux circuits à capteur (32–35, 66–69), conjointement avec les signaux de sortie de l'alimentation centrale (39), par l'intermédiaire d'une ligne commune (31, 83), et en ce que des moyens (29a, 29b; 41, 42; 65, 70; 48a, 49a) sont prévus pour séparer les circuits HF et les circuits à courant continu.

3. Dispositif électronique d'alarme et de surveillance selon l'une des revendications 1 ou 2, caractérisé en ce qu'un circuit de contrôle supplémentaire (37) est raccordé à la sortie de l'oscillateur (29, 63) pour en surveiller le fonctionnement.

4. Dispositif électronique d'alarme et de surveillance selon la revendication 3, caractérisé en ce que le circuit de contrôle (37, 80) est raccordé au circuit de commande central (38) afin de déclencher un signal d'alarme en cas d'absence de signaux en provenance de l'oscillateur.

5. Dispositif électronique d'alarme et de surveillance selon l'une quelconque des revendications précédentes, caractérisé en ce que les circuits à capteur (32–35, 66–69) comportant au moins un système (54, 56; 77, 81) destiné à déterminer la variation de fréquence par unité de temps et/ou à filtrer des variations de fréquence avec un $\Delta t$ prédéterminable.

6. Dispositif électronique d'alarme et de surveillance selon la revendication 5, caractérisé en ce que le système destiné à déterminer la variation de fréquence est un circuit différentiateur (52, 77).

7. Dispositif électronique d'alarme et de surveillance selon l'une quelconque des revendications précédentes, caractérisé en ce que le circuit d'évaluation comporte un dispositif de limitation à valeur de seuil (57) délivrant des signaux d'alarme et/ou de coupure dès qu'une variation de fréquence prédéterminable est atteinte.

8. Montage d'électrodes pour un dispositif électronique d'alarme et de surveillance selon l'une quelconque des revendications précédentes, caractérisé en ce que le montage d'électrodes comporte au moins une partie plate servant de capacité (4, 5; 22, 23; 14, 15), reliée à la partie mobile (1, 6, 12) de l'installation de travail au moyen d'un corps élastique électriquement isolant.

9. Montage d'électrodes selon la revendication 8, caractérisé en ce que la partie servant de capacité (15, 23) est insérée dans le corps électriquement isolant.

10. Montage d'électrodes selon les revendications 8 et 9, caractérisé en ce qu'au moins deux parties plates servant de capacité (14, 15, 22, 23) sont disposés avec une couche élastique intermédiaire (21) de telle sorte que, lors de l'application d'une pression mécanique sur le montage d'électrodes, la couche élastique puisse être comprimée, l'écart entre les électrodes puisse ainsi être réduit, et la capacité modifiée.

Fig. 1

Fig. 2a

Fig. 2b

Fig. 3

Fig. 4

Fig. 5

Fig. 6

Fig. 7

23